(19) **Europäisches Patentamt**
**European Patent Office**
**Office européen des brevets**

(11) **EP 2 533 393 A1**

(12) **EUROPEAN PATENT APPLICATION**
published in accordance with Art. 153(4) EPC

(43) Date of publication:
**12.12.2012 Bulletin 2012/50**

(21) Application number: **11739639.0**

(22) Date of filing: **24.01.2011**

(51) Int Cl.:
*H02J 7/02* (2006.01)     *H01M 10/44* (2006.01)

(86) International application number:
**PCT/JP2011/051225**

(87) International publication number:
**WO 2011/096290 (11.08.2011 Gazette 2011/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2010 JP 2010022309**

(71) Applicant: **Nisshinbo Holdings, Inc.**
**Tokyo 103-8650 (JP)**

(72) Inventors:
 • **HIGASHI, Yoji**
  **Chiba-shi**
  **Chiba 267-0056 (JP)**

 • **ARAI, Teruki**
  **Tokyo 103-8650 (JP)**
 • **SAKAMAKI, Hiroshi**
  **Chiba-shi**
  **Chiba 267-0056 (JP)**

(74) Representative: **Heunemann, Dieter**
  **Vossius & Partner**
  **Siebertstrasse 4**
  **81675 München (DE)**

(54) **STORAGE-MODULE CONTROL DEVICE**

(57) Provided is an electricity storage module control device which is capable of controlling the voltage of each electricity storage section so that an electricity storage module is prevented from being deteriorated even when the electricity storage module is continuously charged/discharged in a relatively short cycle over a long period of time, in particular, when charging/discharging of a large amount of current is repeated. The electricity storage module control device controls the electricity storage module including a plurality of electricity storage sections connected in series. The electricity storage module control device acquires a voltage value of each of the plurality of electricity storage sections over a predetermined period, and controls voltages of the plurality of electricity storage sections based on the voltage value of each of the plurality of electricity storage sections, which has been acquired over the predetermined period.

FIG.2

**Description**

Technical Field

The present invention relates to an electricity storage module control device for controlling a voltage of each of a plurality of electricity storage sections of an electricity storage module including the plurality of electricity storage sections connected in series, and to an electricity storage module control method.

Background Art

There is known an electricity storage module in which a plurality of electricity storage sections, such as electrical double layer capacitors, are connected in series. When such an electricity storage module is charged for use as a power source, due to individual differences among the respective electricity storage sections and the temperature difference at the time of use, variations may arise in voltages of the respective electricity storage sections. For example, in a case where the electricity storage section is a capacitor, due to individual differences of an electrostatic capacitance, an internal resistance, self-discharge characteristics, and the like among the respective capacitors, such voltage variations arise. In this situation, deterioration of a specific electricity storage section may progress, which causes a problem of shortening the life-span as the electricity storage module.

As a method to solve the above-mentioned problem, there is known an equalization circuit which performs equalization of voltages so as to reduce the variations of the voltages of the respective electricity storage sections (for example, see Patent Literatures 1, 2, and 3). Such an equalization circuit calculates, for example, an average value of the voltages of the respective electricity storage sections, and repeats control of discharging an electricity storage section having a higher voltage than the average value, to thereby control the respective electricity storage sections so that the voltages thereof become equal to each other.

Citation List

Patent Literature

[Patent Literature 1]:    JP 2004-32836 A
[Patent Literature 2]:    JP 2009-112071 A
[Patent Literature 3]:    JP 2006-211885 A

Summary of Invention

Technical Problem

In the above-mentioned conventional equalization circuit, in such a case where the charge/discharge energy of the electricity storage module is large, a case where a current flowing through the electricity storage module is large, and a case where charging/discharging is substantially-continuously and frequently repeated, the equalization may take time or the equalization accuracy may be insufficient. Application examples of the electricity storage module, which are liable to cause such problems, include power sources for driving a stacker crane, which frequently transfers large components in and out of a warehouse, an automated guided vehicle, which conveys large components or heavy components in a manufacturing line, and a construction machine such as a power shovel. The power sources to be used for such applications need to repeat charging/discharging of a large amount of power for a short period of time in order to convey large and heavy components, or to frequently regenerate power for energy saving. Particularly in such applications, the conventional equalization circuit suffers from acceleration of the above-mentioned problem, and the equalization becomes more difficult. Thus, the life-span of the electricity storage module is shortened as a whole.

The present invention has been made in view of the above-mentioned circumstances, and therefore has an object to provide an electricity storage module control device and an electricity storage module control method which are capable of controlling the voltage of each electricity storage section so that an electricity storage module is prevented from being deteriorated even when the electricity storage module is continuously charged/discharged in relatively short cycles for a long period of time, in particular, when charging/discharging of a large amount of current is repeated.

Solution to Problem

In order to solve the above-mentioned problem, according to the present invention, there is provided an electricity storage module control device for controlling an electricity storage module including a plurality of electricity storage sections connected in series, the electricity storage module control device including: voltage value acquiring means for acquiring a voltage value of each of the plurality of electricity storage sections over a predetermined period; and voltage controlling means for controlling voltages of the plurality of electricity storage sections based on the voltage value of each of the plurality of electricity storage sections, which has been acquired over the predetermined period.

Further, in the above-mentioned electricity storage module control device, the predetermined period may be a period that is equal to or larger than a period in which charging/discharging of the electricity storage module is performed once.

Further, the above-mentioned electricity storage module control device may further include period voltage computing means for calculating a period voltage value of each of the plurality of electricity storage sections, the period voltage value relating to an average voltage of the each of the plurality of electricity storage sections in the predetermined period, the calculating being performed with use of the voltage value of the each of the plurality of electricity storage sections, which has been acquired over the predetermined period. In the above-mentioned electricity storage module control device, the voltage controlling means may use the calculated period voltage value of each of the plurality of electricity storage sections to control the voltages of the plurality of electricity storage sections.

Further, the voltage value acquiring means may acquire a plurality of voltage values of each of the plurality of electricity storage sections at certain time intervals over the predetermined period, and the period voltage computing means may calculate an average value of the acquired plurality of voltage values as the period voltage value.

Further, the voltage value acquiring means may acquire a plurality of voltage values of each of the plurality of electricity storage sections at certain time intervals over the predetermined period, and the period voltage computing means may execute digital filter processing on the plurality of voltage values to calculate the period voltage value.

Further, in the above-mentioned electricity storage module control device, the voltage controlling means may discharge one or a plurality of control target electricity storage sections selected from the plurality of electricity storage sections to control the voltages of the plurality of electricity storage sections.

Further, the voltage controlling means may calculate an average value of the period voltage values calculated for the plurality of electricity storage sections, respectively, and select at least one electricity storage section having the period voltage value exceeding a threshold determined depending on the average value as the one or the plurality of control target electricity storage sections.

Alternatively, the voltage controlling means may select a predetermined number of electricity storage sections in decreasing order of the period voltage value as the one or the plurality of control target electricity storage sections.

Further, in the above-mentioned electricity storage module control device, the voltage controlling means may change a period in which each of the plurality of electricity storage sections is discharged depending on the period voltage value calculated for each of the plurality of electricity storage sections, to thereby control the voltages of the plurality of electricity storage sections.

Further, in the above-mentioned electricity storage module control device, the voltage controlling means may change a method of selecting the one or the plurality of control target electricity storage sections depending on a charging/discharging state of the electricity storage module.

Further, the electricity storage module control device may change the predetermined period depending on a charging/discharging state of the electricity storage module.

Further, according to the present invention, there is provided a method of controlling an electricity storage module including a plurality of electricity storage sections connected in series, the method including the steps of: acquiring a voltage value of each of the plurality of electricity storage sections over a predetermined period; and controlling voltages of the plurality of electricity storage sections based on the voltage value of each of the plurality of electricity storage sections, which has been acquired over the predetermined period.

Advantageous Effects of Invention

According to the electricity storage module control device of the present invention, even when the charge/discharge cycle of the electricity storage module is relatively short, it is possible to equalize the voltages of the respective electricity storage sections in the long term, and suppress the deterioration of the electricity storage module.

Brief Description of Drawings

FIG. 1A A graph showing a voltage difference arising between electricity storage sections which have a difference in electrostatic capacitance.

FIG. 1B A graph showing a voltage difference arising between electricity storage sections which have a difference in internal resistance.

FIG. 1C A graph showing a voltage difference arising between electricity storage sections which have a difference in self-discharge current.

FIG. 2 A diagram illustrating a circuit configuration of an electricity storage module control device according to an embodiment of the present invention.

FIG. 3 A flow chart illustrating an example of a flow of processing executed by the electricity storage module control device according to the embodiment of the present invention.

Description of Embodiments

Hereinafter, an electricity storage module control device according to an embodiment of the present invention is described with reference to the drawings.

First, a fundamental idea of voltage control to be performed by the electricity storage module control device according to this embodiment is described. The electricity storage module control device according to this embodiment is intended to control an electricity storage module including a plurality of electricity storage sections connected in series. Hereinafter, a case where the electricity storage section is an electrical double layer capacitor is described as a specific example.

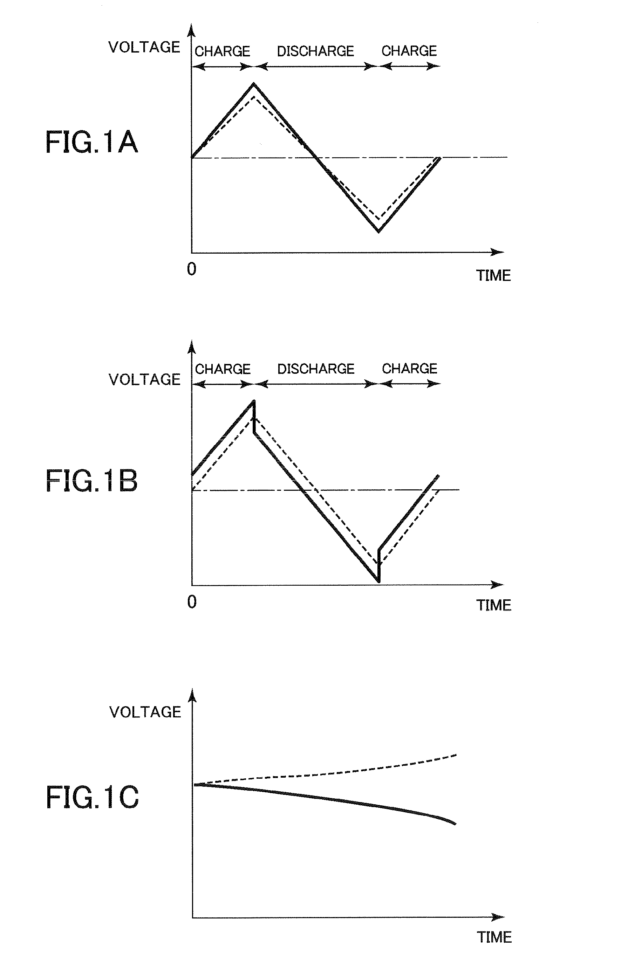

Even when the plurality of electricity storage sections forming the electricity storage module are capacitors having the same specification as each other, there are individual differences of, for example, a capacitance, an internal resistance, and self-discharge characteristics thereamong. Therefore, when the electricity storage module including such capacitors is charged/discharged, variations in voltages of the respective capacitors may arise. FIGS. 1A, 1B, and 1C are graphs schematically showing specific examples of voltage variations in respective factors that cause such variations, the voltage variations arising between the plurality of capacitors due to those factors. All of those graphs show a time change of voltages of the respective capacitors in a case where the electricity storage module including two capacitors C1 and C2 connected in series is used while being charged/discharged. The horizontal axis represents time and the vertical axis represents voltage. Further, the solid line represents the voltage of the capacitor C1, and the broken line represents the voltage of the capacitor C2.

Specifically, FIG. 1A is a graph showing a voltage difference arising between capacitors which have a difference in electrostatic capacitance, and shows a voltage change in a case where the electrostatic capacitance of the capacitor C1 is relatively small, and the electrostatic capacitance of the capacitor C2 is relatively large. Further, FIG. 1B is a graph showing a voltage difference arising between capacitors which have a difference in internal resistance, and shows a voltage change in a case where the internal resistance of the capacitor C1 is relatively small, and the internal resistance of the capacitor C2 is relatively large. Note that both of FIGS. 1A and 1B show a voltage change of each capacitor during a period in which the charging/discharging of the electricity storage module is performed once. That is, FIGS. 1A and 1B show a voltage change of each capacitor during a period from a start point of time 0 to when the voltage of each capacitor restores to an original value through charging, discharging, and recharging. The dashed-dotted line in FIGS. 1A and 1B indicates the time average of the voltage of each capacitor over one charge/discharge period. As shown in FIGS. 1A and 1B, there is a difference in form of voltage change between the case where there is a difference in electrostatic capacitance and the case where there is a difference in internal resistance. However, in both cases, the average value of the voltage of the capacitor C1 within one charge/discharge period is substantially equal to the average value of the voltage of the capacitor C2 within one charge/discharge period. That is, even if there is a difference in capacitor voltage value at a certain time point during the charge/discharge period, in the long term, the voltage difference between the capacitors is averaged. Therefore, the differences in electrostatic capacitance and in internal resistance between the capacitors hardly contribute as a factor of progressing the deterioration of a specific capacitor. On the other hand, FIG. 1C is a graph showing a voltage difference arising between capacitors which have a difference in self-discharge current, and shows a voltage change in a case where the self-discharge current of the capacitor C1 is relatively large, and the self-discharge current of the capacitor C2 is relatively small. Note that the time scale in FIG. 1C is different from that in FIGS. 1A and 1B. In FIG. 1C, the voltage fluctuations caused by repeating charging/discharging a plurality of times in a short time are averaged, and FIG. 1C shows the voltage difference arising between the capacitor C1 and the capacitor C2 in the long term (for example, year unit). As shown in FIG. 1C, the voltage difference between the capacitors, which is caused by the difference in self-discharge current, is, unlike those caused by the differences in electrostatic capacitance and in internal resistance, accumulated and enlarged along with the use of the electricity storage module. When such a voltage difference arises between the capacitors, depending on charge/discharge conditions of the electricity storage module, a specific capacitor may be over-charged or over-discharged, and the characteristics thereof may be rapidly deteriorated. Further, a capacitor in a high-voltage state over a long term (in the example of FIG. 1C, the capacitor C2) is deteriorated earlier than other capacitors. As a result, the life-span of the electricity storage module is shortened as a whole as well.

In view of this, the electricity storage module control device according to this embodiment performs control for particularly equalizing the voltage variations arising among the electricity storage sections over a long time period, as shown as an example in FIG. 1C. Specifically, the electricity storage module control device of this embodiment does not compare the voltage values of the respective electricity storage sections at a certain time point, but determines, based on the voltage values of the respective electricity storage sections acquired over a predetermined period, the electricity storage section to be controlled, and performs control so as to decrease the voltage thereof. With this, even in a case where the voltages of the respective electricity storage sections fluctuate in a short cycle, in the long term, the voltages of the respective electricity storage sections can be equalized so that a specific electricity storage section does not deteriorate earlier than other electricity storage sections.

Hereinafter, the configuration of the electricity storage module control device according to this embodiment is described.

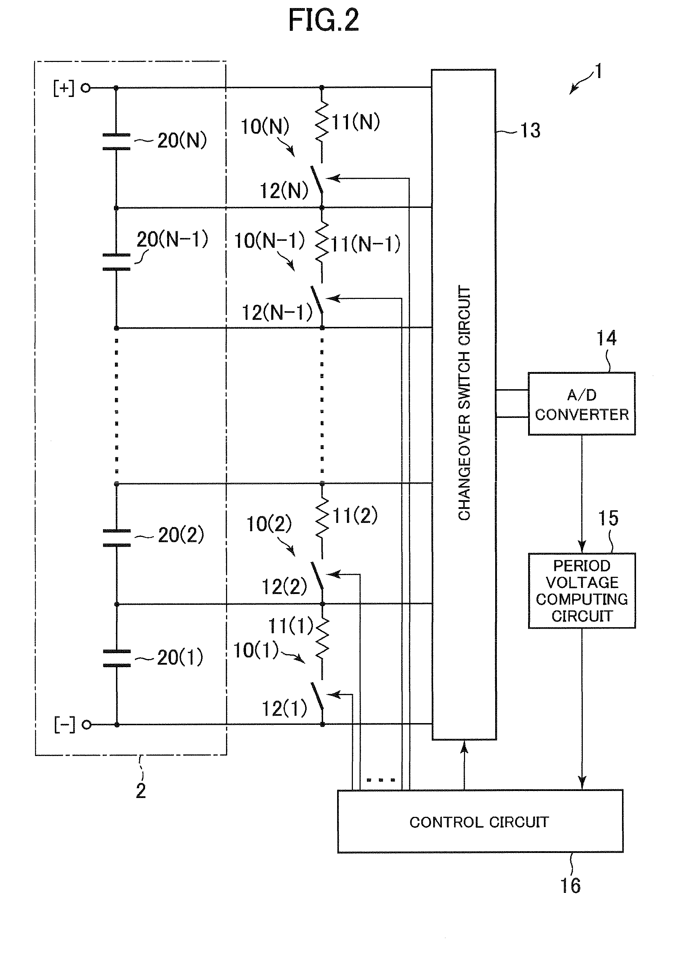

FIG. 2 is a diagram illustrating a circuit configuration of an electricity storage module control device 1 according to this embodiment. An electricity storage module 2 which is to be controlled by the electricity storage module control device 1 according to this embodiment includes a plurality of electricity storage sections 20 connected in series. Specifically, in this embodiment, N (N is a natural number of 2 or more) capacitors are connected in series as the plurality of electricity storage sections 20. Further, the N electricity storage sections 20 are capacitors of the same type and having the same specification as each other. Hereinafter, the N electricity storage sections 20 are represented by, in the order of connection from one end, electricity storage sections 20(1), 20 (2), 20(3), ⋯, 20(N-1), and 20(N). When the electricity storage module 2 is charged, power is supplied from outside to terminals at both ends thereof. Further, the power stored in the electricity storage module 2 is used for driving a load connected to the electricity storage module 2.

The electricity storage module control device 1 according to this embodiment includes, as illustrated in FIG. 2, a plurality of voltage control circuits 10, a changeover switch circuit 13, an A/D converter 14, a period voltage computing circuit 15, and a control circuit 16. The number of the voltage control circuits 10 is the same (that is, N) as that of the electricity storage sections 20 forming the electricity storage module 2, and the N voltage control circuits 10 are connected in parallel with the N electricity storage sections 20, respectively, on a one to one basis.

Each of the voltage control circuits 10 includes a resistor 11 and a switch 12 connected in series to the resistor 11, and is used for controlling the voltage of the electricity storage section 20 connected in parallel to the corresponding voltage control circuit. The switch 12 is, for example, a transistor, which is turned ON/OFF in response to a control signal from the control circuit 16. When the switch 12 is turned ON, a current flows through the voltage control circuit 10, and the electricity storage section 20 connected in parallel to the corresponding voltage control circuit 10 is discharged. As a result, the voltage of this electricity storage section 20 decreases. Note that in FIG. 2, the voltage control circuit 10 connected in parallel to the electricity storage section 20 (n) (n=1, 2, 3, ⋯, N-1, and N) is represented by a voltage control circuit 10(n), and the resistor 11 and the switch 12 forming the voltage control circuit 10(n) are represented by a resistor 11(n) and a switch 12(n), respectively. The voltage control circuits 10 are connected in parallel to the N electricity storage sections 20, respectively, and hence through output, by the control circuit 16, of the control signal for turning ON/OFF the switch 12 of each voltage control circuit 10 individually, control of decreasing the voltage of a specific electricity storage section 20 can be achieved.

The changeover switch circuit 13 inputs, to the A/D converter 14, an analog signal corresponding to a voltage difference arising between both ends of each of the N electricity storage sections 20. Specifically, the changeover switch circuit 13 changes over in turn the N electricity storage sections 20 one by one in response to the control signal from the control circuit 16, and connects both ends of each of the electricity storage sections 20 to the A/D converter 14. With this, the analog signal representing the voltage difference between both ends of each of the N electricity storage sections 20 is input in turn to the A/D converter 14.

The A/D converter 14 converts the analog signal into a digital signal. In this embodiment, the A/D converter 14 converts the analog signal corresponding to the voltage of each electricity storage section 20, which is input from the changeover switch circuit 13, into a digital signal, and outputs the converted digital value to the period voltage computing circuit 15.

The period voltage computing circuit 15 and the control circuit 16 acquire, as described later, the voltage of each electricity storage section 20 over a predetermined period (hereinafter, represented by calculation target period T), and cause each voltage control circuit 10 to operate based on the voltage value acquired over the predetermined period, thereby controlling the voltage of each electricity storage section 20. The period voltage computing circuit 15 and the control circuit 16 may be achieved by, for example, a microprocessor, a storage element, a digital circuit, and the like. Further, the A/D converter 14, the period voltage computing circuit 15, and the control circuit 16 may be achieved by a single microcomputer.

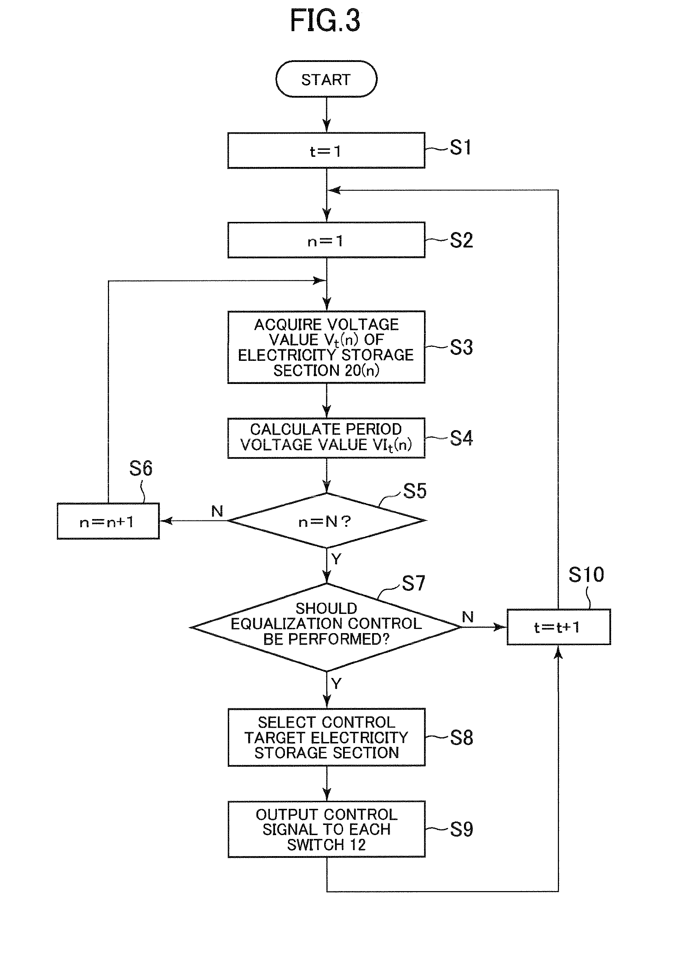

Specifically, the period voltage computing circuit 15 receives an input of the digital value from the A/D converter 14. The electricity storage section 20 as the connection destination of the changeover switch circuit 13 is changed over in turn, and hence the period voltage computing circuit 15 acquires, from the A/D converter 14, the digital value corresponding to a voltage of each of the N electricity storage sections 20 at a certain time point. Further, the period voltage computing circuit 15 repeats such acquiring of the voltage value of each electricity storage section 20 during the charging/discharging of the electricity storage module 2. In this way, the period voltage computing circuit 15 can acquire the voltage value of each of the N electricity storage sections 20 every predetermined time period over the calculation target period T. Note that in this embodiment, the period voltage computing circuit 15 acquires the voltage values of the N electricity storage sections 20 as illustrated in FIG. 3 at every unit time $t_u$. Further, hereinafter, the voltage value of the electricity storage section 20(n) acquired by the period voltage computing circuit 15 at time "t" is represented by voltage value $V_t(n)$. Here, "t" is an integer counter value representing the time lapse, and is a value which starts from a predetermined initial value and increases by 1 every time the period voltage computing circuit 15 acquires a new voltage value after the lapse of the unit time $t_u$.

Further, the period voltage computing circuit 15 uses the voltage values acquired over the calculation target period T to calculate, for each of the N electricity storage sections 20, a value relating to an average voltage of the electricity storage section 20 in the calculation target period T. Hereinafter, this value relating to the average voltage in the calculation target period T is referred to as a period voltage value VI. Further, the period voltage value of the electricity storage section 20 (n) obtained at time "t" is particularly represented by $VI_t(n)$. Note that the period voltage value VI is not necessarily required to be the average voltage itself of the electricity storage section 20 in the calculation target period T.

In this case, the calculation target period T is desired to be a period equal to or larger than a period (charge/discharge period) in which charging/discharging of the electricity storage module 2 is performed once. Through setting of the calculation target period T as described above, when the period voltage value VI is calculated, the voltage fluctuations of each electricity storage section 20, which arise due to the charging/discharging of the electricity storage module 2, are averaged, and the period voltage value VI becomes a value representing a long-term change of the voltage of the electricity storage section 20, which covers a period equal to or larger than the charge/discharge cycle. Note that the calculation target period T may be a period including a plurality of charge/discharge periods. For example, through setting of a long calculation target period T, for example, 1 hour, it is possible to drastically reduce the short-term influence of the voltage fluctuations that will arise due to charging/discharging. One charge/discharge period corresponds to a period from a time point at which the voltage of the electricity storage module 2 starts to rise in response to the power supply from outside, to a time point at which, after the voltage of the electricity storage module 2 drops in response to the power supply to the load, the voltage starts to rise again in response to the power supply from the outside. Note that when the charge/discharge periods vary depending on the usage mode of the electricity storage module 2, the calculation target period T may be set so as to exceed the average value of the plurality of charge/discharge periods included in the period in which the electricity storage module 2 is used once, for example.

Hereinafter, a specific example of processing for computing the period voltage value VI, which is to be performed by the period voltage computing circuit 15, is described.

For example, the period voltage computing circuit 15 calculates, as the period voltage value VI, an average value of M voltage values acquired in the latest past. Here, M corresponds to a value obtained by dividing the calculation target period T by the unit time $t_u$. Specifically, when the periodvoltage value $VI_t(n)$ is a simple average of M voltage values $V_{t-m}(n)$ (m=M-1, M-2, $\cdots$, 1, and 0) acquired within the calculation target period T, the period voltage value $VI_t(n)$ can be calculated by the following mathematical formula.

[Math. 1]

$$VI_t(n) = \left\{ \sum_{m=0}^{M-1} V_{t-m}(n) \right\} \Big/ M$$

Further, the period voltage value VI to be calculated by the period voltage computing circuit 15 may be a value calculated based on a weighted average of the voltage values acquired within the calculation target period T. In this case, the period voltage value $VI_t(n)$ is calculated by the following mathematical formula.

[Math. 2]

$$VI_t(n) = \left\{ \sum_{m=0}^{M-1} W_{t-m} \cdot V_{t-m}(n) \right\} \Big/ (M \cdot F)$$

where $W_{t-m}$ (m=M-1, M-2, ···, 1, and 0) represents a weighting factor, and F represents a correction value for correcting the influence of the weighting factor. Note that, in a case where the average value of the M voltage values is calculated as the period voltage value VI as in the examples described above, the period voltage computing circuit 15 may store, for each electricity storage section 20, the past M voltage values that have been acquired every unit time $t_u$ in a memory, and the period voltage value VI may be calculated with use of the voltage values stored in the memory.

Alternatively, the period voltage computing circuit 15 may be a digital filter functioning as a low pass filter. In this case, the period voltage computing circuit 15 functions as an integrating circuit which performs time integration of a period corresponding to the calculation target period T, and the period voltage value $VI_t(n)$ as a calculation result becomes a value corresponding to the average voltage of the electricity storage section 20(n) in the calculation target period T in the latest past. Specifically, when the period voltage computing circuit 15 is a primary low pass filter, the period voltage value $VI_t(n)$ can be calculated by the following mathematical formula with use of the period voltage value $VI_{t-1}(n)$ calculated at the time of previous voltage sampling.

[Math. 3]

$$VI_t(n) = \{ (K-1) \cdot VI_{t-1}(n) + V_t(n) \} / K$$

where K represents a filter coefficient having a value determined based on the length of the calculation target period T. In this way, the period voltage value $VI_t(n)$ becomes a value based on the voltage values $V_{t-m}$ (m=M-1, M-2, ···, 1, and 0) acquired over the calculation target period T. Note that the period voltage computing circuit 15 is not limited to such a primary low pass filter, and may be a digital filter of various types such as a high-order Butterworth filter or Chebyshev filter.

The control circuit 16 uses the period voltage values VI of the respective electricity storage sections 20 obtained by the period voltage computing circuit 15 to perform voltage control of the respective electricity storage sections 20. Specifically, the control circuit 16 uses the period voltage values VI of the respective electricity storage sections 20 every predetermined time period to select, from the N electricity storage sections 20, one or a plurality of the electricity storage sections 20 (hereinafter, referred to as control target electricity storage section) which become the target of voltage decrease. Then, the control circuit 16 outputs a control signal to turn ON the switch 12 of the voltage control circuit 10 connected to the electricity storage section 20 selected as the control target electricity storage section, and turn OFF the switch 12 of the unselected voltage control circuit 10. As a result, the control target electricity storage section is discharged, and the voltage thereof decreases. At this time, when the voltage of the electricity storage module 2 itself does not change as a whole, the voltage of the electricity storage section 20 which has not been selected as the control target electricity storage section relatively increases. Note that a specific example of a method of selecting the control target electricity storage section, which is to be performed by the control circuit 16, is described later.

Further, as described above, the control circuit 16 controls the changeover switch circuit 13 to change over the switches. In this way, each of the N electricity storage sections 20 and the A/D converter 14 are sequentially connected to each other via the changeover switch circuit 13.

Hereinafter, a specific example of the flow of control to be executed by the electricity storage module control device 1 according to this embodiment is described with reference to the flow chart of FIG. 3. Note that one example is described herein in which the period voltage value VI is the average value of the M voltage values acquired in the most recent past.

First, the control circuit 16 initializes the variable "t" to 1 (S1). Next, the control circuit 16 initializes the variable "n" to 1 (S2). Then, the control circuit 16 controls the changeover switch circuit 13 to change over the connection destination of the A/D converter 14 to the electricity storage section 20(n) (S3). In this way, the A/D converter 14 inputs the voltage value $V_t(n)$ of the electricity storage section 20(n), which is converted into a digital value, to the period voltage computing circuit 15.

Subsequently, the period voltage computing circuit 15 uses the voltage value $V_t(n)$ acquired in Step S3, and the voltage values $V_{t-M+1}(n)$ to $V_{t-1}(n)$ of the electricity storage section 20 (n), which have been acquired in the past, to calculate the period voltage value $VI_t(n)$, and outputs the period voltage value $VI_t(n)$ to the control circuit 16 (S4). Note that in a case of t<M (that is, in a case where M pieces of data have not yet been acquired since the start of control), for example, the period voltage computing circuit 15 may use only data that has already been acquired to calculate the simple average, and then execute the subsequent processing. Alternatively, until M pieces of data are acquired, the period voltage computing circuit 15 may repeatedly execute only the voltage value acquiring processing excluding processing of Step S4 and Steps S7 to S9 described later.

Next, the control circuit 16 determines whether or not n=N is satisfied (S5). Then, when the determination condition of Step S5 is not satisfied (that is, in a case of n<N), the control circuit 16 adds 1 to the value of the variable "n" (S6). Then, the processing returns to Step S3 so that processing for the next electricity storage section 20(n) is executed.

On the other hand, when the determination condition of Step S5 is satisfied, the period voltage values VI of all of the N electricity storage sections 20 at time "t" are acquired. Then, the control circuit 16 uses the N period voltage values VI calculated in Step S4 to first determine whether or not it is necessary to perform voltage equalization control (S7). Specifically, for example, the control circuit 16 compares the maximum value and the minimum value among the N period voltage values $VI_t(n)$ (n=1, 2, ⋯, and N), and determines whether or not a difference therebetween exceeds a predetermined threshold. Then, when the difference between the maximum value and the minimum value exceeds the threshold, the control circuit 16 determines that the voltage equalization control is necessary. Note that the control circuit 16 may always execute, without executing the processing of Step S7, processing of Steps S8 to S10 described later. Alternatively, the control circuit 16 may determine whether or not to perform the voltage equalization control based on a determination criterion other than the determination criterion described herein. Specifically, for example, the threshold to be used for the determination may be changed between a case where the control circuit 16 determines whether or not to start the equalization control in a state in which the equalization control is not performed, and a case where the control circuit 16 determines whether or not to stop the equalization control in a state in which the equalization control is performed. That is, the threshold used for the equalization start determination is set larger than the threshold used for the equalization stop determination (for example, is set to two times the threshold used for the equalization stop determination). In this way, the start of equalization control can be delayed to reduce the energy consumption caused by the discharging of the control target electricity storage section.

When it is determined that the equalization control is unnecessary in Step S7, the control circuit 16 skips the processing of Steps S8 and S9 to proceed to Step S10. On the other hand, when it is determined that the equalization control is necessary in Step S7, the control circuit 16 uses the N period voltage values VI calculated in Step S4 to select the control target electricity storage section by a method described later (S8). Further, the control circuit 16 outputs a control signal to turn ON the switch 12 corresponding to the control target electricity storage section selected in Step S8, and turn OFF the switch 12 corresponding to the electricity storage section 20 not selected as the control target electricity storage section (S9). As a result, the voltage of the control target electricity storage section reduces, and the voltage of the unselected electricity storage section 20 increases, and thus voltages of the respective electricity storage section 20 are equalized.

Finally, the control circuit 16 adds 1 to the value of the variable "t" (S10), and returns to Step S2 to acquire the voltage value at the next time and perform the voltage equalization control. That is, the processing from Step S2 to Step S10 is repeated for each unit time $t_u$ during a period in which the charging/discharging of the electricity storage module 2 is performed.

Note that in the example illustrated in the flow of FIG. 3, at every lapse of the unit time $t_u$, the voltage values of the respective electricity storage sections 20 are acquired, and the acquired voltage values are used to update the period voltage values VI of the respective electricity storage sections 20. Then, the updated period voltage values VI are used to determine whether or not to perform the equalization control. Further, the calculation target period T corresponds to a time period in which such processing is repeated M times. That is, in the electricity storage module control device 1 according to this embodiment, a period longer than a cycle (=unit time $t_u$) of changing the electricity storage section to be the target of voltage control by turning ON/OFF each switch 12 is set as the calculation target period T. The electricity storage module control device 1 uses the voltage values acquired over this period to calculate the period voltage value VI. As described above, the calculation of the period voltage value VI and the change of the control target electricity storage section are performed in a cycle shorter than the calculation target period T. Thus, even when the period voltage value VI is calculated for a relatively long calculation target period T, the electricity storage module control device 1 can equalize the respective electricity storage sections 20 at high speed.

Further, in the flow of FIG. 3, the voltages of the respective electricity storage sections 20 are acquired in turn from the electricity storage section 20(1) connected to the one end of the electricity storage module 2, and then in accordance with the connection order, that is, the order of electricity storage sections 20 (2), 20 (3), ⋯, and 20 (N), but the present invention is not limited thereto. Forexample, the control circuit 16 may acquire the voltages of the respective electricity storage sections 20 in a randomly determined order.

Next, description is given of several specific examples of a method of selecting, by the control circuit 16, the control target electricity storage section with use of the period voltage values VI in Step S8 of the flow of FIG. 3.

As a first example, the control circuit 16 uses a threshold $VI_{th}$ which is determined based on an average value of the period voltage values VI to select the control target electricity storage section. Specifically, the control circuit 16 calculates an average value $VI_{avg}$ of the N period voltage values $VI_t(n)$ (n=1, 2, ···, and N) calculated in the processing of Step S4 described above. Then, the control circuit 16 compares each of the N period voltage values $VI_t(n)$ with the average value $VI_{avg}$, and selects the electricity storage section 20 having the period voltage value $VI_t(n)$ exceeding the average value $VI_{avg}$ as the control target electricity storage section. In this case, the average value $VI_{avg}$ of the period voltage values itself functions as the threshold $VI_{th}$. Alternatively, the control circuit 16 may use as the threshold $VI_{th}$ a value obtained by adding a predetermined value to the average value $VI_{avg}$ and compare the value with the period voltage value $VI_t(n)$.

Next, as a second example, the control circuit 16 may select, from the N electricity storage sections 20, a predetermined number of electricity storage sections 20 in decreasing order of the period voltage value $VI_t(n)$ as the control target electricity storage section. For example, the control circuit 16 selects a half (that is N/2) of the electricity storage sections 20 in decreasing order of the period voltage value $VI_t(n)$ as the control target electricity storage section. Further, the control circuit 16 may select, from the N electricity storage sections 20, electricity storage sections 20 in a number occupying a predetermined rate of the whole in decreasing order of the period voltage value $VI_t(n)$ as the control target electricity storage section. The predetermined rate in this case is desired to be 30% or more and 50% or less in consideration of the power consumption and the amount of time required for equalization control. In this second example, when the N period voltage values $VI_t(n)$ are asymmetrically distributed with respect to the average value, there is conceived a case where the control target electricity storage section is not necessarily optimally selected, for example, a case where an electricity storage section 20 having a period voltage value VI lower than the average value is selected as the control target. However, the electricity storage module control device 1 according to this embodiment uses, as the comparison target, not the voltage values of the respective electricity storage sections 20 at a certain time point, but the period voltage values VI in the calculation target period T. Therefore, an influence such as an instantaneously-generated error is less liable to be generated, and the N period voltage values $VI_t(n)$ are assumed to be distributed substantially symmetrically with respect to the average value. Therefore, in this second example, the control target electricity storage section is selected merely in decreasing order of the period voltage value $VI_t(n)$. In this way, compared to the first example in which the average value of the period voltage values $VI_t(n)$ is calculated, the processing load can be reduced.

Next, as a third example, the control circuit 16 may change a period in which the electricity storage section 20 is the target of voltage control depending on the period voltage value $VI_t(n)$ calculated in each electricity storage section 20. For example, the control circuit 16 calculates statistics relating to the distribution of the period voltage values $VI_t(n)$ (scattered degree), and uses the statistics to determine the amount of difference of the period voltage value $VI_t(n)$ of each electricity storage section 20 from the average value $VI_{avg}$ of the period voltage values. Then, based on the result of determination, the control circuit 16 determines the length of the discharging period of the electricity storage section 20(n).

As a specific example, the control circuit 16 calculates the average value $VI_{avg}$ of the N period voltage values $VI_t(n)$, and calculates a standard deviation $\sigma$ as statistics relating to the distribution. Then, the electricity storage section 20 having the period voltage value $VI_t(n)$ equal to or larger than $(VI_{avg}+\alpha\cdot\sigma)$ is unconditionally selected as the control target electricity storage section to be set as a discharge target. On the other hand, the electricity storage section 20 having the period voltage value $VI_t(n)$ equal to or smaller than the average value $VI_{avg}$ is not selected as the control target electricity storage section. Further, as for the electricity storage section 20(n) having the period voltage value $VI_t(n)$ which is smaller than $(VI_{avg}+\alpha\cdot\sigma)$ and exceeds the average value $VI_{avg}$, whether or not to select the electricity storage section 20 (n) as the control target electricity storage section is changed depending on the state at the previous determination. That is, when the electricity storage section 20(n) is selected as the control target electricity storage section in the previous processing (processing at time t-1) and the discharging of the electricity storage section 20 (n) is being executed at the present time point, the switch 12 (n) is turned OFF to stop the discharging. In contrast, when the electricity storage section 20(n) is not selected as the control target electricity storage section in the previous processing and the electricity storage section 20(n) is selected as the control target electricity storage section in this processing, the switch 12(n) is turned ON. Note that, $\alpha$ represents a predetermined coefficient, and a value thereof may be, for example, 1.

With such control, during a period in which the period voltage value $VI_t(n)$ is equal to or larger than $(VI_{avg}+\alpha\cdot\sigma)$, the electricity storage section 20 (n) is discharged continuously, and when the period voltage value $VI_t(n)$ falls below $(VI_{avg}+\alpha\cdot\sigma)$, the switch 12 (n) is repeatedly turned ON/OFF at every lapse of the unit time $t_u$. As a result, the period in which the electricity storage section 20 (n) is discharged becomes approximately half of the case where the period voltage value $VI_t(n)$ is equal to or larger than $(VI_{avg}+\alpha\cdot\sigma)$. Therefore, the discharging of the electricity storage section 20(n) having the period voltage value $VI_t(n)$ which is not so different from the average value $VI_{avg}$ is performed at a slow rate compared to the case of the electricity storage section 20 (n) having the period voltage value $VI_t(n)$ which significantly exceeds the average value $VI_{avg}$.

Next, as a fourth example, when a predetermined condition is satisfied, the control circuit 16 may use, instead of the period voltage values $VI_t(n)$, the voltage values $V_t(n)$ of the respective electricity storage sections 20 acquired at the time "t", to thereby determine the control target electricity storage section. Specifically, the control circuit 16 calculates an average value $V_{avg}$ of the N voltage values $V_t(n)$ acquired in Step S3. Then, the control circuit 16 determines whether or not an absolute value $|V_{avg}\text{-}VI_{avg}|$ of a difference between the average value $V_{avg}$ of the voltage values and the average value $VI_{avg}$ of the period voltage values exceeds a predetermined threshold. Here, $|V_{avg}\text{-}VI_{avg}|$ functions as an index value representing the charging/discharging state of the electricity storage module 2. When a value of $|V_{avg}\text{-}VI_{avg}|$ is large, the charging/ discharging is frequently performed over the calculation target period T, and when the value thereof is small, almost no charging/discharging is performed. The control circuit 16 selects, when $|V_{avg}\text{-}VI_{avg}|$ exceeds the predetermined threshold, the control target electricity storage section based on the period voltage values $VI_t(n)$ of the respective electricity storage sections 20 by a method such as those described in the first to third examples. On the other hand, when $|V_{avg}\text{-}VI_{avg}|$ is equal to or smaller than the predetermined threshold, the control circuit 16 uses not the period voltage values $VI_t(n)$ but the voltage values $V_t(n)$ acquired at this time point to select the control target electricity storage section by a method such as those described in the first to third examples. That is, for example, the control circuit 16 selects the electricity storage section 20 (n) having the voltage value $V_t(n)$ exceeding the average value $V_{avg}$ as the control target electricity storage section. In this way, in a case where the electricity storage module 2 is used in various usage states, for example, a case where the electricity storage module 2 is repeatedly charged/discharged in the daytime while the electricity storage module 2 is rarely used in the nighttime, the electricity storage module control device 1 changes the method of equalization control in accordance with such change of the usage states. In this manner, the equalization control can be performed in a more preferred mode in each time point.

Further, the electricity storage module control device 1 according to this embodiment may change not only its method of selecting the control target electricity storage section but also its calculation target period T depending on the charging/discharging state of the electricity storage module 2. Specifically, the control circuit 16 changes the number M of the voltage values and/or the filter coefficient K which are used when the period voltage value VI is calculated, based on the value of $|V_{avg}\text{-}VI_{avg}|$ which is an index value representing the charging/discharging state. That is, when the value of $|V_{avg}\text{-}VI_{avg}|$ is large, the value of M or K is increased, and when the value of $|V_{avg}\text{-}VI_{avg}|$ is small, the value of M or K is decreased. In this way, it is possible to perform control so that the calculation target period T becomes longer as the value of $|V_{avg}\text{-}VI_{avg}|$ becomes larger.

Note that, the embodiment of the present invention is not limited to that described above. For example, the electricity storage module 2 to be controlled by the electricity storage module control device 1 according to the embodiment of the present invention is not limited to a capacitor. Various electricity storage devices which are chargeable by supplying power, such as a secondary cell, may be employed as the electricity storage section 20.

Further, in the above description, the voltage values of each electricity storage section 20, which are converted into digital values, are used to calculate the period voltage value VI, but the present invention is not limited thereto. For example, a low pass filter formed of an analog circuit may be used to calculate the period voltage value VI in the calculation target period T.

**Claims**

1. An electricity storage module control device for controlling an electricity storage module including a plurality of electricity storage sections connected in series, the electricity storage module control device comprising:

   voltage value acquiring means for acquiring a voltage value of each of the plurality of electricity storage sections over a predetermined period; and
   voltage controlling means for controlling voltages of the plurality of electricity storage sections based on the voltage value of each of the plurality of electricity storage sections, which has been acquired over the predetermined period.

2. The electricity storage module control device according to claim 1, wherein the predetermined period comprises a period that is equal to or larger than a period in which charging/discharging of the electricity storage module is performed once.

3. The electricity storage module control device according to claim 1, further comprising period voltage computing means for calculating a period voltage value of each of the plurality of electricity storage sections, the period voltage value relating to an average voltage of the each of the plurality of electricity storage sections in the predetermined period, the calculating being performed with use of the voltage value of the each of the plurality of electricity storage sections, which has been acquired over the predetermined period,

wherein the voltage controlling means uses the calculated period voltage value of each of the plurality of electricity storage sections to control the voltages of the plurality of electricity storage sections.

4. The electricity storage module control device according to claim 3, wherein
the voltage value acquiring means acquires a plurality of voltage values of each of the plurality of electricity storage sections at certain time intervals over the predetermined period; and
the period voltage computing means calculates an average value of the acquired plurality of voltage values as the period voltage value.

5. The electricity storage module control device according to claim 3, wherein
the voltage value acquiring means acquires a plurality of voltage values of each of the plurality of electricity storage sections at certain time intervals over the predetermined period; and
the period voltage computing means executes digital filter processing on the plurality of voltage values to calculate the period voltage value.

6. The electricity storage module control device according to claim 3, wherein the voltage controlling means discharges one or a plurality of control target electricity storage sections selected from the plurality of electricity storage sections to control the voltages of the plurality of electricity storage sections.

7. The electricity storage module control device according to claim 6, wherein the voltage controlling means calculates an average value of the period voltage values calculated for the plurality of electricity storage sections, respectively, and selects at least one electricity storage section having the period voltage value exceeding a threshold determined depending on the average value as the one or the plurality of control target electricity storage sections.

8. The electricity storage module control device according to claim 6, wherein the voltage controlling means selects a predetermined number of electricity storage sections in decreasing order of the period voltage value as the one or the plurality of control target electricity storage sections.

9. The electricity storage module control device according to claim 6, wherein the voltage controlling means changes a period in which each of the plurality of electricity storage sections is discharged depending on the period voltage value calculated for each of the plurality of electricity storage sections, to thereby control the voltages of the plurality of electricity storage sections.

10. The electricity storage module control device according to claim 6, wherein the voltage controlling means changes a method of selecting the one or the plurality of control target electricity storage sections depending on a charging/ discharging state of the electricity storage module.

11. The electricity storage module control device according to claim 1, wherein the predetermined period is changed depending on a charging/discharging state of the electricity storage module.

12. A method of controlling an electricity storage module including a plurality of electricity storage sections connected in series, the method comprising the steps of:

acquiring a voltage value of each of the plurality of electricity storage sections over a predetermined period; and controlling voltages of the plurality of electricity storage sections based on the voltage value of each of the plurality of electricity storage sections, which has been acquired over the predetermined period.

FIG.1A

VOLTAGE

CHARGE  DISCHARGE  CHARGE

0  TIME

FIG.1B

VOLTAGE

CHARGE  DISCHARGE  CHARGE

0  TIME

FIG.1C

VOLTAGE

TIME

# FIG.2

# FIG.3

START

$t = 1$ — S1

$n = 1$ — S2

ACQUIRE VOLTAGE VALUE $V_t(n)$ OF ELECTRICITY STORAGE SECTION 20(n) — S3

CALCULATE PERIOD VOLTAGE VALUE $VI_t(n)$ — S4

S6

$n = n+1$ ← N — S5 $n = N$ ?

Y

S7 SHOULD EQUALIZATION CONTROL BE PERFORMED? — N → S10 $t = t+1$

Y

SELECT CONTROL TARGET ELECTRICITY STORAGE SECTION — S8

OUTPUT CONTROL SIGNAL TO EACH SWITCH 12 — S9

## INTERNATIONAL SEARCH REPORT

| International application No. |
| --- |
| PCT/JP2011/051225 |

A. CLASSIFICATION OF SUBJECT MATTER
*H02J7/02*(2006.01)i, *H01M10/44*(2006.01)n

According to International Patent Classification (IPC) or to both national classification and IPC

B. FIELDS SEARCHED

Minimum documentation searched (classification system followed by classification symbols)
H02J7/02, H01M10/44

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2007-166847 A (Nissan Motor Co., Ltd.),<br>28 June 2007 (28.06.2007),<br>entire text; all drawings<br>(Family: none) | 1-12 |
| A | JP 2009-089484 A (Hitachi, Ltd.),<br>23 April 2009 (23.04.2009),<br>entire text; all drawings<br>& US 2009/0085516 A1 & EP 2043218 A2<br>& CN 101396975 A | 1-12 |
| A | JP 2009-011022 A (Nissan Motor Co., Ltd.),<br>15 January 2009 (15.01.2009),<br>entire text; all drawings<br>(Family: none) | 1-12 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 05 April, 2011 (05.04.11) | 12 April, 2011 (12.04.11) |

| Name and mailing address of the ISA/<br>Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004032836 A
- JP 2009112071 A
- JP 2006211885 A